# EUROPEAN PATENT SPECIFICATION

(11) **EP 3 416 256 B1**
(45) Date of publication and mention of the grant of the patent: **30.12.2020**
(21) Application number: 17184460.8
(22) Date of filing: 02.08.2017
(51) Int. Cl.: H02H 7/26, H02J 3/36

(54) **HIGH VOLTAGE DIRECT CURRENT CONVERTER HARMONIC FILTERING AND PROTECTION SYSTEM**
OBERSCHWINGUNGSFILTER UND SCHUTZSYSTEM EINES HOCHSPANNUNGSGLEICHSTROMWANDLERS
SYSTÈME DE PROTECTION ET DE FILTRAGE HARMONIQUE DE CONVERTISSEUR DE COURANT CONTINU HAUTE TENSION

(30) Priority: 13.06.2017 IN 201741020687
(43) Date of publication of application: 19.12.2018
(73) Proprietor: General Electric Technology GmbH, 5400 Baden (CH)
(72) Inventor: KUMAR, Amit, UP-201301 Noida (IN); O'HEIDHIN, Gearoid Sean, St. Leonards Works, Stafford ST17 4LX (GB)
(74) Representative: Freigutpartners IP Law Firm

(56) References cited:
- WO-A1-2014/153729
- WO-A1-2017/063664
- JP-A- S55 109 131

## Description

### TECHNICAL FIELD OF THE INVENTION

The present invention relates to high-voltage, direct current (HVDC) power transmission systems, and particularly to electrode line protection, harmonic filtering and neutral bus overvoltage protection circuits used in such systems.

### BACKGROUND OF THE INVENTION

Direct current (DC) power transmission is used in a number of different applications. High-voltage DC (HVDC) is particularly useful for power transmission over long distances and/or between interconnecting alternating current (AC) networks that operate at different frequencies. A first station may therefore transmit electrical energy to a second station over DC transmission lines, e.g. an overhead lines or subsea or buried cables. The first station may generate the DC supply by conversion from a received AC input supply. The second station then typically provides conversion back from DC to AC. Each of the first and second stations may therefore typically comprise a converter, such as a voltage source converter (VSC) or line-commutated converter (LCC) for example, for converting from AC to DC or vice versa. More complicated networks comprising multiple DC links and multiple stations are also known.

Stations may include a number of protection systems to protect components of the station and/or components external to the station in the event of failure of a part of the station or a system to which the station is connected. Proper co-ordination of these protection systems increases the reliability/availability of the HVDC system.

Stations may include filtering systems to remove harmonics from DC output from a station. This may, for example, limit the flow of harmonics current in overhead lines in order to limit interference with telecommunication systems near the HVDC system.

Stations may include overvoltage protection equipment to protect components from possible overvoltage damage during a fault within the HVDC system.

WO 2017/063664 A1, for example, describes a method and an arrangement for facilitating clearing of a pole fault and isolation of a faulted pole in a power transmission system.

JP S55 109131 A describes a controller for DC transmission apparatus.

### BRIEF DESCRIPTION OF THE INVENTION

A high voltage direct current converter, HVDC, in accordance with the present invention is defined in the appended independent apparatus claim 1. The HVDC converter comprising conversion apparatus configured to receive input power and to provide output power and configured to convert between alternating current, AC, and direct current, DC, a neutral bus connected to the conversion apparatus and an electrode line terminal, and a protection system comprising a switch permanently connected between the neutral bus and a first ground terminal, a filter and arc extinction circuit permanently connected between the neutral bus and a second ground terminal, and a surge arrester permanently connected between the neutral bus and a third ground terminal. The switch is arranged to close in response to detection of a fault on an electrode line connected to the electrode line terminal or on a metallic return line connected to the neutral bus. The protection system thus provides the adequate level of protection, whilst itself being protected by components including the filter and arc extinction circuit and the surge arrester. Further embodiments are defined in the appended dependent claims.

### BRIEF DESCRIPTION OF THE DRAWINGS OF THE INVENTION

Specific embodiments will now be described with reference to the accompanying drawings, in which:
Figure 1 shows an example of a HVDC power transmission system;
Figure 2 shows an example of a converter;
Figure 3 shows an example of a neutral bus ground switch (NBGS) arrangement;
Figure 4 shows an example implementation of a converter;
Figure 5 shows an embodiment of a HVDC power distribution/transmission system;
Figure 6 shows another embodiment of a HVDC power distribution/transmission system;
Figure 7 shows a further embodiment of a HVDC power distribution/transmission system; and
Figure 8 shows a still further embodiment of a HVDC power distribution/transmission system.

### DETAILED DESCRIPTION

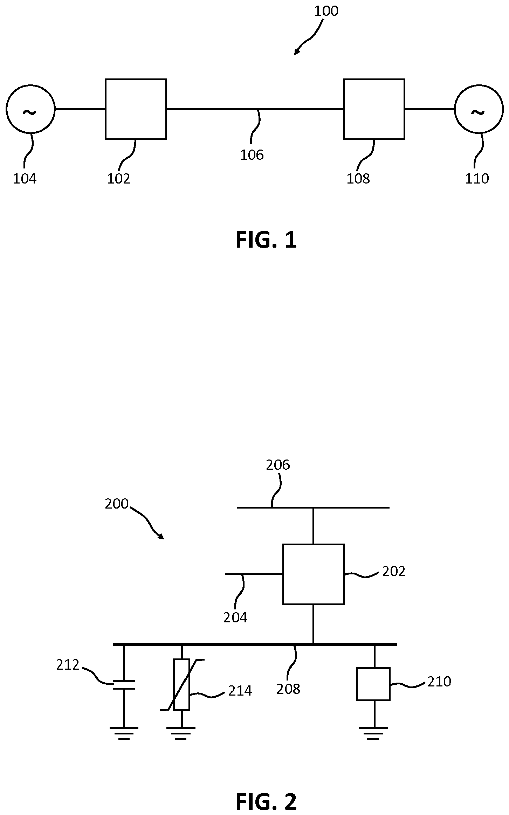

Figure 1 shows an example of a high voltage DC (HVDC) electrical power distribution/transmission system 100. The system 100 includes a first converter 102, such as for example a VSC or LLC, connected to a first AC system 104. Electrical power is distributed via transmission line or transmission network 106 between the converter 102 and a second converter 108 connected to a second AC system 110. Each converter 102 and 108 converts from AC to DC, or from DC to AC, depending on the direction of flow of electrical power through the transmission line or network 106. For example, converter 102 may convert AC from AC system 104 to DC which is distributed via transmission line or network 106 to converter 108, which in turn converts DC to AC for supplying power to AC network 110. Each converter 102 and 108 may include capability to both convert from AC to DC and convert from DC to AC such that the flow of power can be in either direction through transmission line or network 106.

In the example shown, the power distribution system is a unipolar distribution system with ground return (e.g. through earth or sea), though other arrangements are possible, such as for example unipolar with metallic return, bipolar, or other suitable arrangements.

Figure 2 shows an example of a converter 200, which may be the converter 102 or the converter 108 shown in Figure 1. The converter 200 includes conversion apparatus 202 that converts between DC and AC as appropriate. The conversion apparatus 202 is connected to an AC system via node 204, and is connected to a node 206 (also referred to as a pole) for providing DC power to or receiving DC power from a transmission line or network, such as for example transmission line or network 106 shown in Figure 1. The conversion apparatus 202 may arranged such that the converter 200 is a line-commutated converter (LLC). Thus, for example, the conversion apparatus 202 may comprise a six-pulse bridge or a twelve-pulse bridge. In other examples, the converter may be a VSC, or any other suitable type of AC-to-DC or DC-to-AC converter.

The conversion apparatus may include other components, such as for example protection systems, and/or filters for removing harmonics from the DC node 206 and neutral bus 208.

The conversion apparatus 202 is further connected to neutral bus 208. The neutral bus 208 may be connected to an electrode line that provides a ground connection, which may be for example a remote ground connection. The neutral bus 208 may be connected to ground, such as ground local to the converter 200, via neutral bus ground switch (NBGS) arrangement 210. The NBGS arrangement 210 includes a switch that is open during normal operation of the converter, and which may be temporarily closed to provide a ground connection for the neutral bus 208 in the event of a fault, such as for example a fault on the electrode line to which the neutral bus 208 is connected.

The converter 200 includes a capacitor 212 connected between the neutral bus 208 and ground. The capacitor 212 has a large capacitance and is designed to facilitate suppression of harmonics from the neutral bus 208 and limit the current flow in the electrode line or metallic return line resulting from the harmonics. For example, the capacitor 212 may facilitate removal of triplen order harmonics from the neutral bus 208. The capacitor 212 may also control transient neutral bus over voltages.

The converter 200 may also include a surge arrester 214 connected between the neutral bus 208 and ground, to limit transient overvoltages at the neutral bus. The surge arrester may alternatively be provided between an electrode line to which the neutral bus 208 is connected and ground.

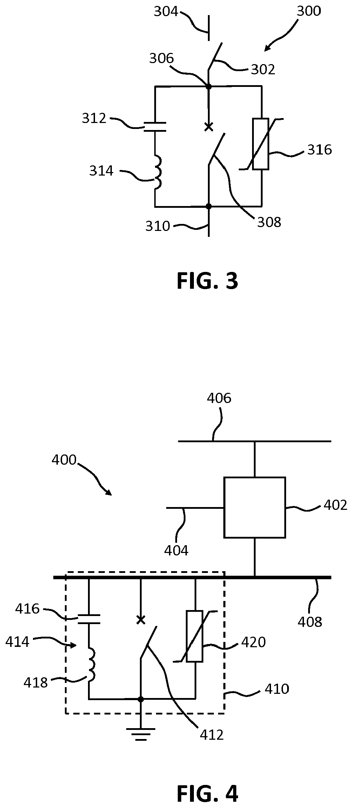

Figure 3 shows an example of a neutral bus ground switch (NBGS) arrangement 300, which may be the NBGS arrangement 210 of Figure 2, in more detail. The NBGS arrangement 300 comprises a switch 302 connected between nodes 304 and 306. The node 304 may be connected to, for example, the neutral bus 208 shown in Figure 2. The NBGS arrangement 300 includes a second switch 308 connected between nodes 306 and 310. The node 310 may be connected to ground, as shown in Figure 2.

A capacitor 312 and reactor 314 are connected in series between nodes 306 and 310. A surge arrester 316 is connected between nodes 306 and 310.

The switch 302 may be used to enable or disable the functionality of the NBGS arrangement 300. For example, if NBGS functionality is not required, the switch 302 is opened. On the other hand, if NBGS functionality is required, the switch 302 is closed. In normal operation of the NBGS arrangement 300 within a converter such as converter 200 shown in Figure 2, with the switch 302 closed (thus providing NBGS functionality), the switch 308 is open. In the event that a ground path is required for the neutral bus 208, for example due to a fault in an electrode line to which the neutral bus 208 is connected (or, in a system with metallic return, a fault in a metallic return line), the switch 308 closes, thus providing a connection to ground through switches 302 and 308. The switch 308 may subsequently be opened again, for example by control and protection systems once a fault has been rectified.

The capacitor 312 and reactor 314 provide arc extinction functionality when the switch 308 is opened or closed. The capacitor 312 and reactor 314 may also be referred to as an auxiliary circuit of the current commutating switch (i.e. switch 412) for arc extinction. The surge arrester 316 provides surge protection, to limit overvoltages across the switch 308 and the capacitor 312 and reactor 314.

Figure 4 shows an example implementation of a converter 400. The converter 400 includes conversion apparatus 402 connected to an AC system via node 404, and is connected to a node 406 (also referred to as a pole) for providing DC power to or receiving DC power from a transmission line or network, such as for example transmission line or network 106 shown in Figure 1. The conversion apparatus 402 is connected to a neutral bus 408. The components and nodes 402-408 may be similar to those nodes and components 202-208 shown in Figure 2.

The conversion apparatus 402 may arranged such that the converter 400 is a line-commutated converter (LLC). Thus, for example, the conversion apparatus 402 may comprise a six-pulse bridge or a twelve-pulse bridge. In other example implementations , the converter may be a VSC, or any other suitable type of AC-to-DC or DC-to-AC converter.

The converter 400 also includes a protection system 410. The protection system may provide at least some functionality similar to a neutral bus ground switch (NBGS) arrangement, such as the NBGS arrangement 300 shown in Figure 3. The protection system 410 includes a switch 412 connected permanently between the neutral bus 408 and ground. The connection is permanent in the sense that, for example, the converter 400 does not include the functionality or components from disconnecting the switch 412 from between the neutral bus 408 and ground, or such functionality or components are never utilized.

The protection system 410 also includes a filter and arc extinction circuit 414 connected permanently between the neutral bus 408 and ground. In the example shown, the filter and arc extinction circuit 414 comprises a capacitor 416 and reactor 418 connected in series between the neutral bus 408 and ground. The filter and arc extinction circuit 414 may be designed to provide arc extinction functionality, similar to the capacitor 312 and reactor 314 shown in Figure 3, to the switch 412. The filter and arc extinction circuit 414 may be further designed to provide filtering functionality for the neutral bus 408, similar to the capacitor 212 shown in Figure 2. For example, the filtering functionality may suppress or remove harmonics, such as triplen harmonics, from the neutral bus 408.

The protection system 410 also includes a surge arrester 420 connected permanently between the neutral bus 408 and ground. The surge arrester 420 combines the functionality of the surge arrester 214 shown in Figure 2 and the surge arrester 316 shown in Figure 3.

In some embodiments, the protection system may also include other components connected in series with the components shown, or in parallel between the neutral bus 408 and ground. Additionally or alternatively, some components may be connected directly to the neutral bus 408 and/or ground. For example, the switch 412, the filter and arc extinction circuit 414 and the surge arrester 420 may be connected directly to the neutral bus 408 and/or ground. In this case, a direct connection means that no other components other than connection wires or tracks are connected in series.

It can therefore be seen from Figure 4 that NBGS functionality can be provided using fewer components than Figure 2 for example. The protection circuit 410 may therefore be considered to be a NBGS arrangement

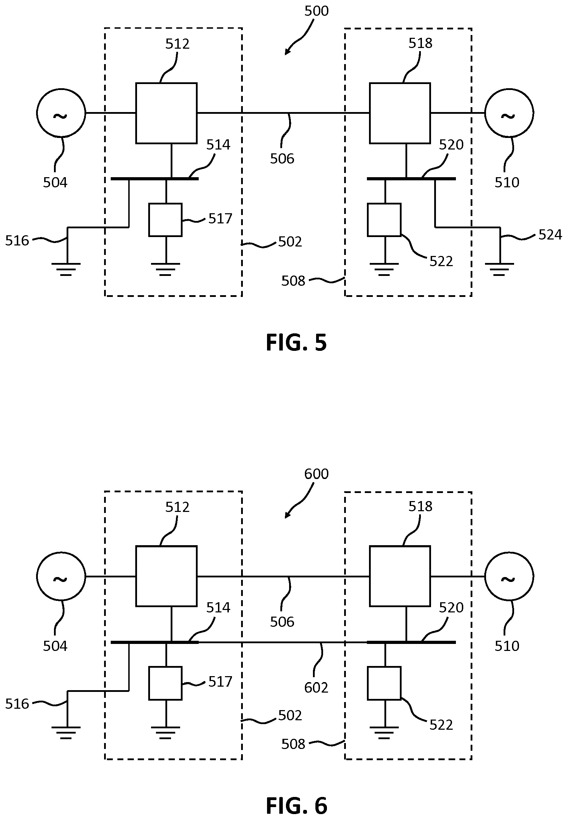

Figure 5 shows an embodiment of a HVDC power distribution system 500. The system 500 includes a first converter 502 connected to a first AC system 504. Electrical power is distributed via transmission line or transmission network 506 between the converter 502 and a second converter 508 connected to a second AC system 510. Each converter 502 and 508 converts from AC to DC, or from DC to AC, depending on the direction of flow of electrical power through the transmission line or network 506. For example, converter 502 may convert AC from AC system 504 to DC which is distributed via transmission line or network 506 to converter 508, which in turn converts DC to AC for supplying power to AC network 510. Each converter 508 may include capability to both convert from AC to DC and convert from DC to AC such that the flow of power can be in either direction through transmission line or network 506. The system 500 is a monopolar HVDC system with ground return.

The converters 502 and 508 may each comprise a converter similar to the converter 400 shown in Figure 4. For example, converter 502 includes conversion apparatus 512 connected to the AC system 504 and transmission line or network 506, and also connected to a neutral bus 514. The neutral bus 514 may be connected to a remote earth connection via electrode line 516, or to a local earth via protection system 517, which may be the protection system 410 shown in Figure 4.

Similarly, the converter includes conversion apparatus 518 connected to the AC system 510 and transmission line or network 506, and also connected to a neutral bus 520. The neutral bus 520 may be connected to a local earth via protection system 522, which may be the protection system 410 shown in Figure 4, and to a remote earth connection via electrode line 524.

Figure 6 shows an embodiment of a HVDC distribution system 600. The system includes components 502-522 similar to those components with like reference numerals in Figure 5. The system 600 includes a connection 602 between the neutral buses 514 and 520 of the converters 502 and 508. The system 600 is therefore a monopolar system with metallic return. The neutral bus 514 of converter 502 is connected to the electrode line 516, whereas the electrode line 524 connection to the neutral bus 520 of converter 508 is omitted, though it may be present in some embodiments.

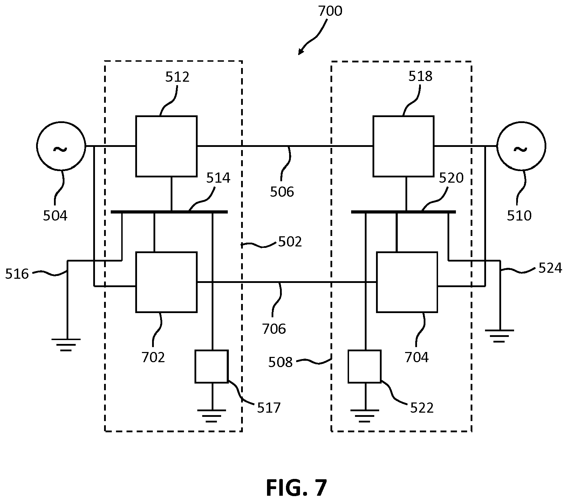

Figure 7 shows an embodiment of a HVDC distribution system 700. The system includes components 502-524 similar to those components with like reference numerals in Figures 5 and 6. The converters 502 and 508 of system 700 each include a second conversion apparatus 702 and 704 respectively connected to the AC system 504 and AC system 510 respectively, and to the neutral buses 514 and 520 respectively. The second conversion apparatus 702 and 704 exchange DC power with transmission line (e.g. pole) 706. The system 700 is therefore a bipolar HVDC distribution system with ground return.

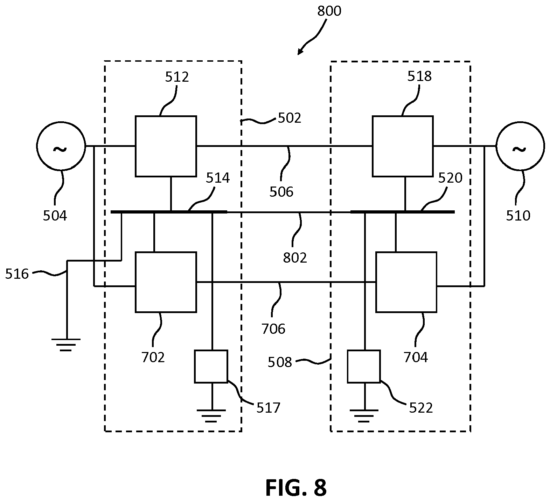

Figure 8 shows an embodiment of a HVDC distribution system 800. The system includes components 502-525 similar to those components with like reference numerals in Figures 5-7, and components 702-706 similar to those components with like reference numerals in Figure 7. The system 800 includes a metallic return line 802 that connects neutral bus 514 of converter 502 to neutral bus 520 of converter 508. The system 800 is therefore a bipolar HVDC distribution system with metallic return. As a result, the electrode line connection to the neutral bus of one of the converters (in this example, the electrode line 524 connection shown in Figure 7) can be omitted, though it may be present in some embodiments.

It should be noted that the above-mentioned embodiments illustrate rather than limit the invention, and that those skilled in the art will be able to design many alternative embodiments without departing from the scope of the appended claims. Any components illustrated or described are provided as illustrative examples and do not exclude the presence of further components within the embodiments, including in series or parallel with illustrated components, unless otherwise specified. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A high voltage direct current, HVDC, converter comprising:
conversion apparatus (402, 512, 518, 702, 704) configured to receive input power and to provide output power and configured to convert between alternating current, AC, and direct current, DC;
a neutral bus (408, 514, 520) connected to the conversion apparatus and an electrode line terminal, wherein said electrode line terminal is connected to an electrode line (516, 524) that provides a ground connection and/or to a metallic return line (602);
a protection system (410, 517, 522) comprising:
a switch (412) permanently connected between the neutral bus and a first ground terminal;
a filter and arc extinction circuit (414) permanently connected between the neutral bus and a second ground terminal; and
a surge arrester (420) permanently connected between the neutral bus and a third ground terminal; **characterized in that**
the switch (412) is arranged to close in response to detection of a fault on the electrode line (516, 524) or on the metallic return line (602) connected to the neutral bus.

2. The HVDC converter of claim 1, wherein the filter and arc extinction circuit (414) comprises a capacitor (416) and a reactor (418) connected in series, or comprises a capacitor.

3. The HVDC converter of claim 2, wherein the filter and arc extinction circuit (414) is connected directly between the neutral bus (408, 514, 520) and the second ground terminal.

4. The HVDC converter of any of the preceding claims, wherein the converter does not comprise at least one of: a capacitor connected directly between the neutral bus and a ground terminal; and a second surge arrester connected directly between the neutral bus (408, 514, 520) and a ground terminal.

5. The HVDC converter of any of the preceding claims, wherein the switch (412) is connected directly to the neutral bus (408, 514, 520).

6. The HVDC converter of any of the preceding claims, wherein the switch (412) is connected directly to the first ground terminal.

7. The HVDC converter of any of the preceding claims, wherein the first, second and third ground terminals are connected to ground.

8. The HVDC converter of any of the preceding claims, wherein at least two of the first, second and third ground terminals are the same ground terminal.

9. The HVDC converter of any of the preceding claims, wherein the electrode line terminal and/or the neutral bus (408, 514, 520) is connected to an electrode line.

10. The HVDC converter of any of the preceding claims, wherein the conversion apparatus is configured to convert AC input power to DC output power.

11. The HVDC converter of any of claims 1 and 9, wherein the conversion apparatus is configured to convert DC input power to AC output power.

12. The HVDC converter of any of the preceding claims, further comprising second conversion apparatus (702, 704) configured to receive the input power and to provide second output power, the second conversion apparatus connected to the neutral bus (514, 520).

13. The HVDC converter of any of the preceding claims, wherein the conversion apparatus (402, 512, 518, 702, 704) is connected to a transmission line terminal for distributing the output power using a transmission line or network (506).

14. The HVDC converter of any of the preceding claims, wherein the protection system (410, 517, 522) is a neutral bus ground switch, NBGS, arrangement.

15. A power distribution system comprising at least one HVDC converter as claimed in any of the preceding claims.

## Patentansprüche

1. Hochspannungs-Gleichstromwandler, HVDC, umfassend
eine Umwandlungsvorrichtung (402, 512, 518, 702, 704), die so konfiguriert ist, dass sie Eingangsleistung empfängt und Ausgangsleistung liefert, und die so konfiguriert ist, dass sie zwischen Wechselstrom, AC, und Gleichstrom, DC, umwandelt;
einen Neutralbus (408, 514, 520), der mit der Umwandlungsvorrichtung verbunden ist, und einen Elektrodenleitungsanschluss, wobei der Elektrodenleitungsanschluss mit einer Elektrodenleitung (516, 524), die eine Masseverbindung bereitstellt, und/oder mit einer metallischen Rückleitung (602) verbunden ist;
ein Schutzsystem (410, 517, 522), umfassen:
einen Schalter (412), der dauerhaft zwischen dem Neutralleiter und einer ersten Erdungsklemme angeschlossen ist;
eine Filter- und Lichtbogenlöschschaltung (414), die dauerhaft zwischen dem Neutralleiter und einer zweiten Erdungsklemme angeschlossen ist; und
einen Überspannungsableiter (420), der dauerhaft zwischen dem Neutralleiter und einer dritten Erdungsklemme angeschlossen ist; **dadurch gekennzeichnet, dass**
der Schalter (412) so angeordnet ist, dass er als Reaktion auf die Erkennung eines Fehlers an der Elektrodenleitung (516, 524) oder an der metallischen Rückleitung (602), die mit dem Neutralleiter verbunden ist, schließt.

2. HVDC-Wandler nach Anspruch 1, bei dem die Filter- und Lichtbogenlöschschaltung (414) einen Kondensator (416) und eine Drossel (418) in Reihe geschaltet enthält oder einen Kondensator enthält.

3. HVDC-Wandler nach Anspruch 2, bei dem der Filter- und Lichtbogenlöschkreis (414) direkt zwischen dem Neutralleitersammelschiene (408, 514, 520) und dem zweiten Erdungsanschluss angeschlossen ist.

4. HVDC-Wandler nach einem der vorstehenden Ansprüche, wobei der Wandler nicht mindestens eines der folgenden Elemente umfasst: einen Kondensator, der direkt zwischen den Neutralleiter und einen Erdungsanschluss geschaltet ist; und einen zweiten Überspannungsableiter, der direkt zwischen den Neutralleiter (408, 514, 520) und einen Erdungsanschluss geschaltet ist.

5. HVDC-Wandler nach einem der vorstehenden Ansprüche, wobei der Schalter (412) direkt mit dem Neutralbus (408, 514, 520) verbunden ist.

6. HVDC-Wandler nach einem der vorstehenden Ansprüche, wobei der Schalter (412) direkt mit der ersten Erdungsklemme verbunden ist.

7. HVDC-Wandler nach einem der vorstehenden Ansprüche, bei dem die erste, zweite und dritte Erdungsklemme mit der Erde verbunden sind.

8. HVDC-Wandler nach einem der vorstehenden Ansprüche, bei dem mindestens zwei der ersten, zweiten und dritten Erdungsklemmen die gleiche Erdungsklemme sind.

9. HVDC-Wandler nach einem der vorstehenden Ansprüche, bei dem der Anschluss der Elektrodenleitung und/oder des Neutralleiters (408, 514, 520) mit einer Elektrodenleitung verbunden ist.

10. HVDC-Wandler nach einem der vorstehenden Ansprüche, bei dem der Wandler so konfiguriert ist, dass er Wechselstrom-Eingangsleistung in Gleichstrom-Ausgangsleistung umwandelt.

11. HVDC-Wandler nach einem der Ansprüche 1 und 9, wobei das Umwandlungsgerät so konfiguriert ist, dass es Gleichstrom-Eingangsleistung in Wechselstrom-Ausgangsleistung umwandelt.

12. HVDC-Wandler nach einem der vorstehenden Ansprüche, der ferner eine zweite Umwandlungsvorrichtung (702, 704) umfasst, die so konfiguriert ist, dass sie die Eingangsleistung empfängt und eine zweite Ausgangsleistung liefert, wobei die zweite Umwandlungsvorrichtung mit dem Neutralbus (514, 520) verbunden ist.

13. HVDC-Wandler nach einem der vorstehenden Ansprüche, wobei die Umwandlungsvorrichtung (402, 512, 518, 702, 704) mit einem Übertragungsleitungsanschluss zur Verteilung der Ausgangsleistung über eine Übertragungsleitung oder ein Netzwerk (506) verbunden ist.

14. HVDC-Wandler nach einem der vorstehenden Ansprüche, wobei das Schutzsystem (410, 517, 522) eine Neutralbus-Erdungsschalter-Anordnung, NBGS, ist.

15. Stromverteilungssystem mit mindestens einem HVDC-Wandler wie in einem der vorstehenden Ansprüche beansprucht.

## Revendications

1. Un convertisseur de courant continu à haute tension, CCHT, comprenant :
un appareil de conversion (402, 512, 518, 702, 704) configuré pour recevoir une puissance d'entrée et fournir une puissance de sortie et configuré pour convertir entre le courant alternatif, CA, et le courant continu, CC ;
un bus neutre (408, 514, 520) connecté à l'appareil de conversion et une borne de ligne d'électrode, dans lequel ladite borne de ligne d'électrode est connectée à une ligne d'électrode (516, 524) qui fournit une connexion de masse et/ou à une ligne de retour métallique (602) ;
un système de protection (410, 517, 522) comprenant :
un interrupteur (412) connecté en permanence entre le bus neutre et une première borne de terre ;
un filtre et un circuit d'extinction d'arc (414) connectés en permanence entre le bus neutre et une deuxième borne de terre
un parafoudre (420) connecté en permanence entre le bus neutre et une troisième borne de terre ; **caractérisé en ce que**
le commutateur (412) est agencé pour se fermer en réponse à la détection d'un défaut sur la ligne d'électrode (516, 524) ou sur la ligne de retour métallique (602) connectée au bus neutre.

2. Le convertisseur CCHT de la revendication 1, dans lequel le circuit de filtrage et d'extinction d'arc (414) comprend un condensateur (416) et un réacteur (418) connectés en série, ou comprend un condensateur.

3. Le convertisseur CCHT de la revendication 2, dans lequel le filtre et le circuit d'extinction d'arc (414) sont directement connectés entre le bus de neutre (408, 514, 520) et la deuxième borne de terre.

4. Le convertisseur CCHT de l'une des revendications précédentes, dans lequel le convertisseur ne comprend pas au moins un des éléments suivants : un condensateur connecté directement entre le bus de neutre et une borne de terre ; et un deuxième parafoudre connecté directement entre le bus de neutre (408, 514, 520) et une borne de terre.

5. Le convertisseur CCHT de l'une des revendications précédentes, dans lequel le commutateur (412) est connecté directement au bus neutre (408, 514, 520).

6. Le convertisseur CCHT de l'une des revendications précédentes, dans lequel le commutateur (412) est connecté directement à la première borne de terre.

7. Le convertisseur CCHT de l'une des revendications précédentes, dans lequel les première, deuxième et troisième bornes de terre sont reliées à la terre.

8. Le convertisseur CCHT de l'une des revendications précédentes, dans lequel au moins deux des première, deuxième et troisième bornes de terre sont la même borne de terre.

9. Le convertisseur CCHT de l'une des revendications précédentes, dans lequel la borne de la ligne d'électrode et/ou le bus neutre (408, 514, 520) est connecté à une ligne d'électrode.

10. Le convertisseur CCHT de l'une des revendications précédentes, dans lequel l'appareil de conversion est configuré pour convertir la puissance d'entrée CA en puissance de sortie CC.

11. Le convertisseur CCHT de l'une des revendications 1 et 9, dans lequel l'appareil de conversion est configuré pour convertir la puissance d'entrée CC en puissance de sortie CA.

12. Le convertisseur CCHT de l'une des revendications précédentes, comprenant en outre un second appareil de conversion (702, 704) configuré pour recevoir la puissance d'entrée et pour fournir une seconde puissance de sortie, le second appareil de conversion étant connecté au bus neutre (514, 520).

13. Le convertisseur CCHT de l'une des revendications précédentes, dans lequel l'appareil de conversion (402, 512, 518, 702, 704) est connecté à un terminal de ligne de transmission pour distribuer la puissance de sortie en utilisant une ligne ou un réseau de transmission (506).

14. Le convertisseur CCHT de l'une des revendications précédentes, dans lequel le système de protection (410, 517, 522) est un arrangement de commutateur de masse de bus neutre, NBGS.

15. Un système de distribution d'électricité comprenant au moins un convertisseur CCHT tel que revendiqué dans l'une des revendications précédentes.
